# EUROPÄISCHE PATENTSCHRIFT

(11) **EP 3 435 032 B1**
(45) Veröffentlichungstag und Bekanntmachung des Hinweises auf die Patenterteilung: **11.11.2020**
(21) Anmeldenummer: 17183279.3
(22) Anmeldetag: 26.07.2017
(51) Int. Cl.: G01B 11/30, G01B 11/00

(54) **OPTISCHER RAUHEITSSENSOR FÜR EINE KOORDINATENMESSMASCHINE**
OPTICAL ROUGHNESS SENSOR FOR A COORDINATE MEASURING MACHINE
CAPTEUR OPTIQUE DE RUGOSITÉ POUR UNE MACHINE DE MESURE DE COORDONNÉES

(43) Veröffentlichungstag der Anmeldung: 30.01.2019
(73) Patentinhaber: Hexagon Technology Center GmbH, 9435 Heerbrugg (CH)
(72) Erfinder: JENSEN, Thomas, 9400 Rorschach (CH)
(74) Vertreter: Kaminski Harmann

(56) Entgegenhaltungen:
- EP-A1- 2 690 395
- EP-A2- 2 463 615
- DE-A1-102007 017 664
- US-A1- 2016 091 299

## Beschreibung

Die Erfindung betrifft einen optischen Rauheitssensor zum Erfassen einer Oberflächeninformation und eine Koordinatenmessmaschine (CMM) zur Rauheitsvermessung einer Objektoberfläche mittels eines solchen Sensors.

In vielen technischen Anwendungsbereichen besteht das Bedürfnis, Oberflächen von Objekten und damit auch die Objekte selbst mit hoher Genauigkeit zu vermessen. Dieses gilt insbesondere für die fertigende Industrie, für die das Vermessen und Überprüfen von Oberflächen von Werkstücken hohe Bedeutung, insbesondere auch zu Zwecken der Qualitätskontrolle, hat.

Für diese Anwendungen werden üblicherweise Koordinatenmessmaschinen eingesetzt, welche eine präzise Vermessung der Geometrie einer Objektoberfläche, typischerweise mit Mikrometer-Genauigkeit, ermöglichen. Zu vermessende Objekte können beispielsweise Motorblöcke, Getriebe und Werkzeuge sein. Bekannte Koordinatenmessmaschinen vermessen die Oberfläche, indem ein mechanischer Kontakt hergestellt und die Oberfläche abgetastet wird. Beispiele hierfür sind Portalmessmaschinen, wie sie z.B. in der DE 43 25 337 oder DE 43 25 347 beschrieben werden. Ein anderes System beruht auf der Verwendung eines Gelenkarms, dessen am Ende des mehrteiligen Arms angeordneter Messsensor entlang der Oberfläche bewegt werden kann. Gattungsgemässe Gelenkarme werden beispielsweise in der US 5,402,582 oder der EP 1 474 650 beschrieben.

Im Stand der Technik wird mit solchen Koordinatenmessgeräten als Standardmesssensor ein optischer oder taktiler Sensor verwendet, welcher beispielsweise aus einer Rubinkugel besteht, die auf einem Messstab montiert ist. Die Auslenkung des taktilen Sensors, im Falle einer für dreidimensionale Messungen ausgelegten Koordinatenmessmaschine in drei zueinander senkrechten Richtungen X, Y und Z, wird bei der Abtastung über ein Schaltelement oder wegmessendes Element bestimmt. Anhand des Schaltpunkts oder Auslenkungswegs werden der Ort des Kontakts und damit die Oberflächenkoordinaten berechnet.

Zur Rekonstruktion des Oberflächenprofils aus den Messdaten müssen die mechanischen Abmessungen des Sensors selbst und dessen Ausrichtung beim Kontakt mit der Objektoberfläche berücksichtigt werden. Der Sensor ist ausgebildet mit einer Messspitze bekannter Geometrie, typischerweise sphärisch oder für spezielle Anwendungen ellipsoidal, typischerweise mit einem (Haupt-)Radius in der Grössenordnung einiger Millimeter. Der Begriff "Messspitze" ist im Zusammenhang mit der vorliegenden Erfindung allgemein zu verstehen als (taktiler) Messsensor jeder beliebigen Form und Ausdehnung, wobei dieser nicht zwingend eine spitz zulaufende Form aufweisen muss (jedoch kann). Die mit der Koordinatenmessmaschine unter Verwendung eines taktilen Sensors gemessenen Rohdaten stellen die gemessenen Ortskoordinaten eines Bezugspunkts der Messspitze, beispielsweise des Messspitzen-Zentrums, dar.

Bedingt durch die physikalischen Abmessungen der Messspitze des taktilen Sensors ist jedoch die Messungsauflösung beschränkt. Die physikalische Abmessung der Messspitze bzw. die damit verbundene limitierte Messungsauflösung führen zu einem "Glättungseffekt" bei der Vermessung rauer Oberflächen: Während Erhebungen oder Spitzen einer Objektoberfläche nahezu perfekt bzw. objektgetreu gemessen werden können, kann die Messspitze des taktilen Sensors aufgrund ihrer physikalischen Ausdehnung nicht in enge Vertiefungen einer Objektoberfläche eindringen. Dieses bewirkt eine Glättung des gemessenen Oberflächenprofils in einer nichtlinearen Art, indem die Messdaten von vertieften Oberflächenbereichen geglättet sind, während die Messdaten erhabener Oberflächenbereiche nahezu objektgetreu sind. Für ingenieur-technische Aspekte ist dieses sogar oft vorteilhaft, weil, insbesondere für eine flächige Verbindung von Oberflächen zweier Objekte, oft eine genaue Kenntnis von deren erhabenen Bereichen wichtiger als die genaue Bestimmung enger vertiefter Oberflächenbereiche ist.

Andererseits ist die Auflösung taktiler Messungen, insbesondere für eine genauere Vermessung von Oberflächenvertiefungen aus den vorgenannten methodeninhärenten Limitierungen, für viele neue Anwendungen nicht mehr ausreichend.

Die EP 2 463 615 A2 offenbart beispielsweise einen Ansatz, welcher eine Kombination eines taktilen Sensors mit einem an den Sensor gekoppelten optischen Messsystems darstellt. Eine Auslenkung des taktilen Sensors wird hierbei mittels Interferometrie gemessen.

Deshalb werden im Stand der Technik inzwischen Ansätze zur berührungslosen Vermessung, insbesondere mit optischen Sensoren, verfolgt. Mittels eines optischen Sensors mit einem ausgesandten Messlichtstrahl, insbesondere von einem Laser, können auch Oberflächenvertiefungen sehr genau vermessen werden, solange der Fokus des Messlichtstrahls, zu vergleichen mit der Messspitze eines taktilen Sensors, auf der Objektoberfläche nicht grösser als die Struktur von deren Vertiefungen ist. Die Auflösung optischer Messverfahren kann demzufolge deutlich höher sein, als diejenige taktiler Messverfahren für eine genaue Vermessung von Oberflächenprofilen, insbesondere von deren Vertiefungen. Demzufolge unterscheidet sich ein mit einem optischen Sensor erstelltes Profil von einem mit einem taktilen Sensor erstellten Profil einer und derselben Objektoberfläche. Auch ein mit einem optischen Sensor erstelltes Oberflächenprofil stellt, ebenso wie ein mit einem taktilen Sensor erstelltes Oberflächenprofil, jedoch eine, basierend auf den physikalischen Abmessungen der "Messspitze", in ihrer Auflösung gefilterte Abbildung der tatsächlichen Objektoberfläche dar, wobei die Abmessungen der optischen "Messspitze" im Vergleich zu der Messspitze eines taktilen Sensors als gegen die Wellenlänge der optischen Messstrahlung konvergierend angesehen werden können bzw. vernachlässigbar sind. Deswegen sind optische Sensoren und Messverfahren für eine Koordinatenmessmaschine geeignet, prinzipiell eine wirklich objektgetreue Vermessung eines Oberflächenprofils bereitzustellen.

Optische Sensoren bzw. Messverfahren für eine Koordinatenmessmaschine sind mit einer Reihe von Vorteilen verbunden: Die Messung erfolgt kontaktlos, und der optische Sensor kann schneller als ein taktiler Sensor über eine Objektoberfläche geführt werden, mit einer geringeren physikalischen Abmessung der "Messspitze", wodurch eine höhere laterale Auflösung der Messung ermöglicht wird.

Trotzdem beinhalten nicht nur mit taktilen, sondern auch mit optischen Sensoren erstellte Oberflächenprofile immer auch Merkmale, die nicht von der vermessenen Oberfläche stammen, sondern durch das Messverfahren bedingt sind. Beispielsweise sind aus der DE 197 35 975 Messfehler bei der Höhenbestimmung einer Oberfläche aufgrund von Vibrationen der verwendeten Koordinatenmessmaschine und Verfahrensmassnahmen für eine Unterdrückung dieser Effekte bekannt.

Die Messergebnisse optischer Sensoren, insbesondere für interferometrische Messverfahren, werden oft nachteilig durch Phasenrauschen oder Speckle-Effekte beeinflusst. Abhängig von der Rauheit der Objektoberfläche kann beispielsweise die Phase des von einer Oberfläche reflektierten Lichts in einer solchen Weise verändert werden, dass eine zu einem angepeilten Objektpunkt gemessene Distanz falsch ist. Als Folge solcher lokalen optischen Störeinflüsse weisen mit optischen Sensoren vermessene Oberflächenprofile oft Messfehler auf, wie beispielsweise virtuelle singuläre, aber in der Objektoberfläche nicht existierende Spitzen oder Vertiefungen.

Zur Rauheitsmessung werden heute vorwiegend stationäre, taktile Messgeräte verwendet. Der Prüfling wird hierbei auf einem Messtisch platziert und eine Nadel wird unter Kontakt mit der Oberfläche linear über das Objekt geführt. Dabei können Höhenveränderungen der Nadel registriert werden und daraus ein Höhenprofil abgeleitet werden. Wie oben erwähnt, hängt die Messauflösung auch hier von der Nadelgeometrie ab.

Ein Nachteil einer solchen Vorrichtung liegt in dem Erfordernis, dass das Werkstück hierfür auf den Messtisch gebracht werden muss. In Abhängigkeit der Werkstückgrösse und - form kann dies sehr aufwändig und zeitintensiv sein. Jüngere Ansätze schlagen daher die Kombination eines spezifischen Rauheitssensors mit einer Koordinatenmessmaschine vor, um einen Transport des Prüflings vermeiden zu können.

Als solcher Sensor ist beispielsweise der "BMT MiniProfiler" von Breitmeier Messtechnik GmbH bekannt. Der Sensor kann als Wechselsystem in einem Magazin zur wiederholten An- und Abkopplung an eine CMM bereitgestellt werden. Die Ansteuerung sowie Auswertung kann direkt in der CMM Bedieneroberfläche erfolgen. Der Sensor wird mit der Objektoberfläche in Kontakt gebracht. Die CMM bleibt während der nachfolgenden Rauheitsmessung im Stillstand, d.h. der Sensor als Ganzes wird relativ zum Objekt nicht bewegt. Die Nadel des Sensors wird in diesem Zustand über die Oberfläche geführt. Hierdurch können durch die CMM verursachte Vibrationen vermindert werden.

Dennoch können verbleibende, externe Vibration seitens der CMM oder durch andere Umwelteinflüsse verursachte Positionsfehler nicht ausgeschlossen werden und das Messergebnis negativ beeinflussen. Ferner kann es zu nichtlinearen Effekten bei der Bewegung der Nadel (Bewegung von Massen) kommen, die mit dem Sensor nicht berücksichtigbar sind.

Ein weiterer Nachteil für diese Rauheitserfassung und das zu prüfende Werkstück ist der dabei bestehende mechanische Kontakt zwischen Sensor und Werkstück. Hierdurch können ungewollte Veränderungen der Oberfläche eintreten, insbesondre bei empfindlichen Werkstückoberflächen, z.B. Spezialbeschichtungen.

Eine Aufgabe der Erfindung ist daher die Bereitstellung eines verbesserten Rauheitssensors, wobei mit dem Sensor die oben genannten Probleme gelöst werden können.

Im Besonderen ist es Aufgabe der vorliegenden Erfindung einen verbesserten Rauheitssensor, insbesondere hinsichtlich Verlässlichkeit und Genauigkeit von Erfassten Messdaten, zur Verwendung mit einer Koordinatenmessmaschine vorzusehen.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Der Erfindung liegt die Idee zu Grunde anstelle eines standardmässig kontaktierenden Sensors einen solchen mit einem verringerten Einfluss auf die zu messenden Oberfläche bereitzustellen.

Die Erfindung beruht im Unterschied zum Stand der Technik auf einem optischen Messprinzip zur Erfassung von Rauheiten einer Oberfläche. Das bevorzugte Prinzip basiert auf der Interferenz von unterschiedlichen Signalen, die seitens des Sensors bereitgestellt werden können. Ausserdem wird die Heranziehung des Ansatzes der optischen Kohärenztomographie für die Auswertung der Signale und die Ableitung eines Oberflächenprofils vorgeschlagen.

Die Erfindung betrifft einen optischen, insbesondere interferometrisch messenden, Rauheitssensor für eine Koordinatenmessmaschine, mit einer Strahlkopplungseinheit zur Einkopplung von optischer Nutzstrahlung und insbesondere Auskopplung von unterschiedlichen Interferenzsignalen und mit einem lokalen Referenzoszillatorelement zur Bereitstellung eines Referenzpfads und eines interferometrischen Referenzsignals mittels eines Referenzstrahlungsanteils der Nutzstrahlung. Das Referenzoszillatorelement kann hierdurch einen lokalen Oszillator (LO) bereitstellen.

Der Rauheitssensor verfügt zudem über einen ersten Auskoppelpfad mit einem ersten Strahldurchtrittsfenster zur bidirektionalen Transmission eines Messstrahlungsanteils der Nutzstrahlung. Das Strahldurchtrittsfenster kann z.B. durch eine Optik oder ein Aussparung am Sensorgehäuse gebildet sein. Vielmehr ist das Strahldurchtrittsfenster jedoch generisch zu verstehen und stellt unabhängig von dessen Ausgestaltung eine Emission von Strahlung aus dem Sensor heraus und den Empfang von reflektierter Strahlung bereit.

Mittels des ersten Auskoppelpfads ist der Messstrahlungsanteil auf eine zu vermessende Objektoberfläche ausrichtbar und eine Reflexion an der Objektoberfläche des Messstrahlungsanteils erfassbar, wobei durch den reflektierten Messstrahlungsanteil ein Oberflächensignal bezüglich der Objektoberfläche bereitstellbar ist. Das Oberflächensignal enthält dabei insbesondere eine Information bezüglich einer aktuellen Entfernung zur Objektoberfläche.

Der Referenzpfad und der Auskoppelpfad sind ausserdem derart angeordnet, dass das Referenzsignal und das Oberflächensignal interferieren und basierend auf der Interferenz von Referenzsignal und Oberflächensignal ein Rauheitssignal ableitbar ist. Die Anordnung ist so gewählt, dass die Interferenz bei einer Bewegung des Auskoppelpfads bestehen bleibt, d.h. über eine durch die Bewegbarkeit des Auskoppelpfads definierte Scanstrecke (fortwährend) gegeben ist.

Mit dieser Vorrichtung kann ein axialer Abstand (in Richtung der optischen Emissionsstrahlachse bzw. z-Achse) zwischen dem Rauheitssensor und einem Punkt der Messoberfläche gemessen werden.

Wird der Messstrahl nun zusätzlich entlang eines Scanpfades oder einer Scanachse, z.B. parallel zu oder mit einem gleich bleibenden Abstand zu einer zu vermessenden Oberfläche, bewegt und werden dabei mit einer bestimmten Frequenz oder fortlaufend Abstandsdaten erfasst, so kann damit ein Oberflächenprofil (axiale Abstandswerte über eine laterale Positionsveränderung entlang der Scanachse) für die abgescannte Strecke erstellt werden. Der Messstrahl wird hierfür quer (seitlich) zu dessen Ausbreitungs- bzw. Emissionsrichtung, also lateral bezüglich einer Messstrahlrichtung, bewegt.

Für eine solche scannende Rauheitsmessung einer Objektoberfläche ist die Kenntnis oder die Bestimmung eines Abstands oder einer Abstandsänderung zwischen dem Sensor und der Oberfläche während der Messung vorteilhafterweise gegeben. Ohne eine diesbezügliche Information kann die optische Rauheitsmessung teilweise stark fehlerbehaftet sein, beispielsweise aufgrund von unerwarteten äusseren Einflüssen (z.B. Stösse) oder unerwünschten Abweichung vom vorgesehenen Scanpfad.

Die Bewegung des Auskoppelpfads über das Objekt kann auf unterschiedliche Weisen erfolgen. Einerseits kann der Rauheitssensor gekoppelt an eine Koordinatenmessmaschine (CMM) entlang eines definierten Pfades automatisch und motorisiert geführt werden. Ist der Oberflächenverlauf des zu messenden Objekts bekannt, kann der Scanpfad für den Rauheitssensor entsprechend angepasst definiert werden. Eine Messgenauigkeit für die daraus resultierenden Rauheitswerte liegt hierbei im Rahmen der Mess- bzw. Führungsgenauigkeit der CMM.

Alternativ oder auch zusätzlich kann der Rauheitssensor ein in einer festen Positionsrelation relativ zu der Strahlkopplungseinheit (oder Sensorgehäuse) angeordnetes Abstandsreferenzelement aufweisen. Das Abstandsreferenzelement ist dabei zur oberflächenkontaktierenden Führung des Rauheitssensors und zur Bereitstellung eines konstanten Abstands zur Objektoberfläche während einer Rauheitsmessung ausgebildet. Das Abstandsreferenzelement kann hierzu z.B. kufenartig ausgebildet sein, so dass eine (quasi) gleitende Berührung und Führung über die Oberfläche ermöglicht wird. Beispielsweise weist eine Ausführungsform als Kufe eine reibungsarme Oberflächenbeschichtung auf. Denkbar ist ferner eine Drei-Punkt-Auflage mit drei gekrümmten (z.B. kugelförmigen) Auflageelementen.

In anderen Worten kann das Abstandsreferenzelement (z.B. Kufe oder Halbkugeln) für eine Messung auf die zu messende Oberfläche aufgesetzt werden, der Sensor durch eine gesteuerte Bewegung des CMM-Messkopfs (an welchem der Rauheitssensor angekoppelt ist) unter Beibehaltung des Kontakts zwischen Abstandsreferenzelement und Oberflächen über die Oberfläche bewegt werden und die Erfassung von Abstandsdaten mit dem Rauheitssensor fortlaufend ausgeführt werden.

In beiden oben beschriebenen Varianten kann der laterale Oberflächenversatz anhand der durch die Koordinatenmessmaschine bereitgestellten Positionsdaten (Koordinaten) bestimmt und für die Erstellung eines Rauheitsprofils herangezogen werden.

Die Bestimmung von Abständen mit dem Sensor kann mittels optischer Messtechniken basierend auf einer durchgestimmten optischen Kohärenztotographie (OCT) erfolgen. Diese erlauben eine Entfernungsbestimmung über einen verhältnismässig grossen Bereich, nur begrenzt durch die Kohärenzlänge der verwendeten Laserstrahlung. Durch die Verteilung von entsprechenden optischen Signalen (siehe unten) auf unterschiedliche Reflektionspunkte (innerhalb und ausserhalb des Sensors) ist es möglich unterschiedliche Entfernung gemeinsam (gleichzeitig) zu erfassen bzw. zu überwachen.

Durch das Führen des Rauheitssensors mittels der CMM zur Messung eines Oberflächenprofils können z.B. vermehrt Vibrationen im System auftreten, die ein erhöhtes Fehlerrisiko für die Rauheitsdaten zur Folge haben können. Zur Vermeindung einer CMM Bewegung während der Messung und damit zu einer zu erwartenden Steigerung der Messgenauigkeit und Messverlässlichkeit weist der Rauheitssensor eine (innere) Antriebseinheit zur Bewegung des ersten Auskoppelpfads auf. Die Antriebseinheit ist dabei derart mit dem ersten Auskoppelpfad gekoppelt, dass der erste Auskoppelpfad - und damit die emittierte Messstrahlung - relativ zur Strahlkopplungseinheit parallel oder koaxial entlang einer Scanachse (in x-Richtung) über eine definierte Scanstrecke hinweg gesteuert bewegbar ist. Die Bewegung erfolgt quer, insbesondere orthogonal, zur Emissionsrichtung des Messstrahlungsanteils durch das Strahldurchtrittsfenster. Die Bewegung erfolgt in Sinne der vorliegenden Erfindung damit lateral bezüglich dieser Emissionsrichtung und typischerweise ebenso lateral über eine zu vermessenden Oberfläche.

"Lateral" wird im Kontext dieser Erfindung bezüglich der Emissionsrichtung der Messstrahlung des Sensors verstanden, also seitlich (quer) zu dieser Emissionsachse und z.B. insbesondere auch in Richtung der Scanachse.

Die lateralen Positionen des Auskoppelpfads bzw. der emittierten Messstrahlung können beispielsweise mittels eine Schrittmotors verfolgt und bestimmt werden. Der Antrieb kann zur Positionserfassung in x-Richtung alternativ oder zusätzlich mit einem Linearencoder versehen sein.

Bei solch einer Rauheitsmessung kann der Rauheitssensor in einer bestimmten Position und Orientierung relativ zu dem Objekt unverändert gehalten werden. Die laterale Messstrecke in x-Richtung wird dann insbesondere allein durch ein Verstellen des Auskoppelpfads mittels des Antriebs bereitgestellt. Denkbar ist jedoch auch eine Überlagerung aus einer Bewegung des Messkopfs der CMM, also des dabei angekoppelten Rauheitssensors, und der inneren Antriebseinheit.

In einer Ausführungsform weist der optische Rauheitssensor einen lateralen Positionspfad zur Breitstellung eines lateralen Positionssignals bezüglich einer Scanachsenposition des Auskoppelpfads auf, wobei der laterale Positionspfad durch eine Reflexion eines Lateralstrahlungsanteils der Nutzstrahlung definiert ist. Es kann also ein Teil der Nutzstrahlung dazu verwendet werden die laterale x-Position für das Rauheitsprofil zu bestimmen. Für jeden Höhenwert in z-Richtung kann ein zugeordneter Positionswert in x-Richtung bestimmt werden. Die Daten können einander zugeordnet werden und aus den Wertepaaren können entsprechende Oberflächenkoordinaten und damit ein Profil abgeleitet werden.

Das laterale Positionssignal kann ebenfalls mit dem Referenzsignal zur Interferenz gebracht werden, wobei anhand dieser Interferenz die laterale Positionsänderung (also die x-Koordinate des Rauheitsprofils) festgestellt werden kann.

Gemäss einer spezifischen Ausführungsform kann der Rauheitssensor einen ersten Strahlteiler aufweisen, wobei der erste Strahlteiler eine zumindest teilweise Trennung des Auskoppelpfads (Messstrahlungsanteil) und des lateralen Positionspfads (Strahlungsanteil zur Bestimmung der x-Position) bereitstellt, insbesondere eine Trennung des Lateralstrahlungsanteils und des Messstrahlungsanteils.

Der Strahlteiler kann insbesondere ein spezifisches Durchlässigkeitsniveau aufweisen (z.B. 5%), um das reflektierte Messsignal von dem reflektierten lateralen Positionssignal möglichst eindeutig trennen zu können. Es können also z.B. 95% reflektiert werden und dem Auskoppelpfad zur Verfügung stehen und 5% transmittieren und als Lateralsignal reflektiert werden. Dies ist für die Auswertung und Identifikation der unterschiedlichen Signale vorteilhaft.

Der optische Rauheitssensor kann zudem eine reflektierende Fläche, insbesondere einen Spiegel, zur Bereitstellung der Reflexion des Lateralstrahlungsanteils aufweisen. Die reflektierende Fläche kann insbesondere direkt an dem ersten Strahlteiler angeordnet oder aufgedampft sein. Alternativ kann der Spiegel in einem separiert ausgeformten Strahlengang, z.B. in Freistrahloptik oder mittels einer optischen Faser, angeordnet sein.

In einer Ausführungsform ist das Referenzoszillatorelement durch eine Endfläche einer Ferrule (Hülse), insbesondere der Strahlkopplungseinheit, bereitgestellt. Hier kann am Rand der Ferrule ein erster Teilreflex der eingebrachten Nutzstrahlung (z.B. werden etwas 4% der Nutzstrahlung reflektiert) auftreten. Dieser Teilreflex erzeugt ein lokales Oszillatorsignal (Referenzsignal) und repräsentiert damit eine Art Referenzposition.

Das Referenzoszillatorelement kann alternativ durch die an dem ersten Strahlteiler angeordnete reflektierende Fläche repräsentiert sein, wobei dann das Signal für den lokalen Oszillator durch einen Reflex eines Teils der Nutzstrahlung bereitgestellt ist. Beispielsweise kann ein Strahlteiler eine 5%ige Durchlässigkeit aufweisen und die tranmittierende Strahlung auf die reflektierende Fläche geführt werden.

Mit der vorliegenden Erfindung ist es ausserdem möglich unterschiedliche Einflüsse, die eine Genauigkeit einer Rauheitsmessung beeinflussen können, zu überwachen und zu kompensieren.

Ein Haupteinfluss kann von der Koordinatenmessmaschine, sogar im Stillstand der CMM, kommen. Aufgrund der Luftlager und der naturgemäss begrenzten Steifigkeit der CMM können fast dauernd Vibrationsfrequenzen von einigen Hertz und kleine Amplituden auftreten. Diese haben typischerweise einen vernachlässigbaren Einfluss für die Messpunktbestimmung, jedoch sind die Auswirkungen auf eine Rauheitsmessung signifikant. Ein anderer Einfluss beruht auf der begrenzten Stabilität des internen Antriebs des Sensors, wodurch z.B. (laterale und/oder axiale) Schwingungen während der Bewegung auftreten können. Der interne Antrieb des Sensors kann auch durch Nichtlinearitäten negativ beeinflusst sein

Für eine Kompensation von eventuell auftretenden Störeinflüssen auf eine Messung kann der Rauheitssensor erfindungsgemäss eine Signalkompensationsanordnung zur Bereitstellung von zumindest einem Kompensationssignal aufweisen.

Zum einen kann eine Information bezüglich einer Messposition des Rauheitssensors relativ zu der Objektoberfläche, insbesondere bezüglich eines Abstands zwischen Rauheitssensor und Objektoberfläche, durch ein erstes Kompensationssignal bereitstellbar sein. Hierdurch kann ein Versatz des Rauheitssensors während einer Rauheitsmessung detektiert und berücksichtigt werden. Als Versatz ist dabei auch eine Vibration oder Schwingung des Sensors während einer Messung zu verstehen.

Zum zweiten kann mittels der Signalkompensationsanordnung eine Kompensationsinformation bezüglich einer relativen Positionierung des Auskoppelpfads in einem Rauheitssensorgehäuse durch ein zweites Kompensationssignal bereitstellbar sein. Hierbei kann ein möglicher interner Versatz für die Messstrahlauskopplung, z.B. ein ungewünschter axialer oder lateraler Versatz des Auskoppelpfads, detektiert und berücksichtigt werden. Auch interne Schwingungen, die beispielsweise durch die Antriebseinheit verursacht werden können, können hierbei erfasst werden.

In einem OCT-Tomogramm (Fourier-transformiertes Interferogramm) können die einzelnen detektierten Signale und damit messbaren Entfernungen durch Bandpass-Filterung getrennt werden und dann als einzelne Distanzwerte weiterverarbeitet werden. Hierdurch können alle relevanten Entfernungen gleichzeitig gemessen und hinsichtlich eventueller Messstörungen (z.B. Vibration der CMM oder interne Antriebsfehler) synchronisiert werden.

Die (bereits kompensierten) Rauheitsdaten können dann durch eine angepasste Kombination der gemessenen Signale extrahiert werden.

Generell ermöglicht die Bandpass-Filterung eine Trennung einzelner Abstände in dem Rauheitssensor und damit die individuelle Weiterverbreitung und Zuordnung der jeweiligen Signale. Hierfür können die Strecken der einzelnen Strahlpfade (Auskoppelpfad, Referenzpfad, lateraler Kompensationspfad und Scankompensationspfad) durch entsprechende Anordnung der jeweiligen Reflexionsflächen unterschiedlich eingerichtet sein. Ein Übersprechen von Signalen kann so verhindert und eine Eindeutigkeit für die Auswertung bereitgestellt werden.

In einer Ausführungsform weist die Signalkompensationsanordnung einen zweiten Auskoppelpfad mit einem zweiten Strahldurchtrittsfenster auf, wobei eine bidirektionale Transmission eines ersten Kompensationsanteils der Nutzstrahlung, insbesondere parallel zum Messstrahlungsanteil, bereitgestellt ist. Der erste Kompensationsanteil kann auf das zu vermessende Objekt ausgerichtete werden und eine Reflexion an dem Objekt des ersten Kompensationsanteils kann damit entsprechend erfassbar sein. Durch den reflektierten ersten Kompensationsanteil ist das erste Kompensationssignal bereitstellbar.

Insbesondere ist der zweite Auskoppelpfad positionsfest relativ zur Strahlkopplungseinheit, insbesondere positionsfest relativ zu dem Rauheitssensorgehäuse, angeordnet.

Während der erste Auskoppelpfad für eine Messung also in einer lateralen x-Richtung bewegt wird, um ein zeilenweises Erfassen der Objektoberfläche zu ermöglichen, bleibt der zweite Auskoppelpfad dabei in einer unveränderten Position relativ zu der Objektoberfläche (für die Messung wird der gesamte Sensor in eine fixe Position relativ zum zu vermessenden Objekt gebracht und dort gehalten). Es können hierdurch via den zweiten Pfad fortlaufend Daten zu im Wesentlichen einem Punkt der Oberfläche abgeleitet werden, wobei insbesondere der Abstand zu diesem Punkt überwachbar ist. Durch die Abstandsüberwachung können auftretende Vibrationen des Rauheitssensors erfasst werden und mit den via den ersten Auskoppelpfad gemessenen Profildaten verrechnet werden. Die feststellbaren axialen Vibrationen treten in aller Regel entsprechend auch für den Messpfad der Messstrahlung auf, weshalb eine solche Kompensation sehr genau und mit hoher Verlässlichkeit für die Rauheitsdaten sein kann.

Der Rauheitssensor kann entsprechend einen, die Auskopplung des ersten Kompensationsanteils aus der Nutzstrahlung bereitstellenden, zweiten Strahlteiler, mit z.B. einem 50%igen Reflexionsniveau, aufweisen.

In einer Ausführungsform weist die Signalkompensationsanordnung eine sich parallel oder koaxial zur Scanachse erstreckende Referenzkomponente auf. Die Referenzkomponente kann beispielsweise als reflektierendes Element (Spiegel) ausgebildet sein. Hierzu kann eine Auskopplung eines Scankompensationsanteils aus der Nutzstrahlung entlang eines Scankompensationspfads bereitgestellt werden, wobei der Scankompensationspfad mit dem ersten Auskoppelpfad verbunden und mittels der Antriebseinheit gemeinsam mit dem ersten Auskoppelpfad entlang der Scanachse bewegbar angeordnet ist. Es ist zudem eine Reflexion des Scankompensationsanteils an der Referenzkomponente für zumindest einen Teil einer Scanstrecke (definiert durch z.B. eine mit dem ersten Auskoppelpfad abfahrbare Wegstrecke) und durch den reflektierten Scankompensationsanteil als zweites Kompensationssignal bereitstellbar.

Diese Ausführung der Signalkompensationsanordnung stellt eine gemeinsame Bewegung des Kompensationspfads mit dem Messpfad bereit. Die beiden Pfade sind so kombiniert, dass ein fester Positions- und Orientierungsbezug hergestellt ist. Die Referenzkomponente ist z.B. fest mit dem Sensorgehäuse verbunden. Hierdurch wird die Überwachung einer eventuellen ungewünschten Positionsabweichung des Auskoppelpfads und damit des Messpfads und Messsignals mittels der Kompensationsanordnung ermöglicht.

Für die Auskopplung des Scankompensationsanteils aus der Nutzstrahlung kann der Rauheitssensor einen diese Auskopplung bereitstellenden dritten Strahlteiler aufweisen.

Gemäss einer Ausführungsform der Erfindung kann die Signalkompensationsanordnung derart angeordnet sein, dass das erste und/oder das zweite Kompensationssignal mit dem Referenzsignal interferieren und basierend auf einer Interferenz von
- Referenzsignal mit Oberflächensignal und
- Referenzsignal mit erstem Kompensationssignal und/oder
- Referenzsignal mit zweitem Kompensationssignal ein kompensiertes Rauheitssignal ableitbar ist.

Aus der Interferenz aus Referenzsignal und Oberflächensignal kann das "rohe" Oberflächen- oder Rauheitsprofil (unter zusätzlicher Berücksichtigung zugeordneter x-Positionen) abgeleitet werden. Es werden axiale Abstände (z-Komponente des Oberflächenprofils) über eine abgefahrene Scanstrecke (x-Komponente des Oberflächenprofils) erfasst.

Wahlweise oder gesamthaft kann entsprechend zusätzlich eine Interferenz aus Referenzsignal mit erstem Kompensationssignal und/oder eine Interferenz aus Referenzsignal mit zweitem Kompensationssignal mitberücksichtigt werden.

Die Interferenz aus Referenzsignal mit dem ersten Kompensationssignal liefert direkt Kompensationsdaten bezüglich externen Einflüssen auf den Sensor, die eine Positionsbeeinflussung des Sensors während der Messung zugänglich und korrigierbar machen. Es können fortlaufend Abstände zwischen dem Sensor und der Oberfläche gemessen und die Messwerte mit den Daten für das rohe Oberflächenprofil verrechnet werden. Vibrationen des Sensors werden so fortlaufend und zuverlässig kompensiert.

Die Interferenz aus Referenzsignal mit dem zweiten Kompensationssignal liefert eine direkte Information bezüglich innerer Messzustände des Sensors und damit innere Kompensationsdaten. Hierdurch kann z.B. ein lineares, paralleles Führen des Auskoppelpfads bezüglich der Scanachse überwacht oder eine innere Schwingung oder Vibration erfasst werden. Etwaige Abweichungen können aus diesem Interferenzsignal abgeleitete und mit den Daten für das rohe Oberflächenprofil verrechnet werden. Damit ist eine Kompensation für innere Störeinflüsse bereitgestellt.

Insbesondere ist das Referenzoszillatorelement in einer festen Positionsrelation relativ zu dem ersten Auskoppelpfad angeordnet und gemeinsam mit dem ersten Auskoppelpfad bewegbar.

In einer Ausführungsform weist der Rauheitssensor eine optische und/oder mechanische Schnittstelle auf, insbesondere eine integrierte optisch-mechanische Schnittstelle, wobei die Schnittstelle eine bidirektionale Übertragung von optischer Strahlung zwischen dem Rauheitssensor und einer Koordinatenmessmaschine und/oder eine Energieübertragung zu dem Rauheitssensor bereitstellt.

Beispielsweise kann der Rauheitssensor über einen internen Energiespeicher zum Antrieb der Antriebseinheit verfügen, der durch die Schnittstelle aufgeladen werden kann, insbesondere z.B. dann wenn der Rauheitssensor in einem Wechselmagazin für eine Messung vorgehalten wird. Alternativ oder zusätzlich stellt die Schnittstelle eine Stromversorgung des Sensors für und während einer Messung bereit.

Der optische Schnittstellenteil kann eine spezifische und robuste Kupplung zur vielfachen An- und Abkoppeln des Sensors aufweisen.

Die Erfindung betrifft auch eine Koordinatenmessmaschine zur Erfassung einer Oberflächeninformation bezüglich eines zu vermessenden Objekts. Die Koordinatenmessmaschine weist eine Basis, eine Schnittstelle zum Anordnen eines Messsensors für die Erfassung der Oberflächeninformation und eine Führung zur Bereitstellung einer Relativbewegung der Schnittstelle relativ zur Basis in zumindest eine Richtung, insbesondere in zwei oder drei Richtungen, auf. Zudem ist ein Steuerungs- und Verarbeitungseinheit vorgesehen.

Die Koordinatenmessmaschine weist erfindungsgemäss eine Rauheitsmessfunktionalität auf, bei deren Ausführung gesteuert durch die Steuerungs- und Verarbeitungseinheit die Oberflächeninformation durch optisches Abtasten vermittels eines an der Schnittstelle angeordneten optischen Rauheitssensors (= Messsensor) erfassbar ist. Im Rahmen der Rauheitsmessfunktionalität wird der Rauheitssensor in eine definierte Position relativ zur Objektoberfläche bewegt und ein Scanvorgang durch eine Relativbewegung eines ersten Auskoppelpfads des Rauheitssensors ausgeführt, wobei ein Messstrahlungsanteil einer Nutzstrahlung auf eine zu vermessende Objektoberfläche emittiert und eine Reflexion des Messstrahlungsanteils an der Objektoberfläche erfasst wird und mittels eines durch den reflektierten Messstrahlungsanteil bereitgestellten Oberflächensignals bezüglich der Objektoberfläche ein ein Oberflächenprofil repräsentierender Datensatz als die Oberflächeninformation erzeugt wird. Der Messkopf wird während der Ausführung des Scanvorgangs in der definierten Position relativ zur Objektoberfläche gehalten.

Insbesondere ist der Rauheitssensor gemäss einer obigen Ausführungsform ausgebildet.

Durch die Ausführung einer Rauheitsmessung mit der CMM kann eine vergleichsweise hochaufgelöste Oberflächeninformation für zumindest einen Teil des zu vermessenden Objekts gewonnen werden. Insbesondere kann das zeilenweise Erfassen des Rauheitsprofils mehrfach mit einem bestimmten Versatz, z.B. in kleinen Intervallen in eine Richtung orthogonal zur Scanachse, erfolgen. So kann nicht nur eine zweidimensionale Rauheitsbestimmung sondern eine (quasi) dreidimensionale Rauheitsbestimmung durchgeführt werden.

Die CMM vermag also zum einen eine typische Vermessung eines Objekt bereitzustellen und zudem eine Rauheitsbestimmung für einen Teil des Objekts. Beide Datensätze können zu einem gemeinsamen Datensatz zusammengefasst und/oder als ein Messmodel abgelegt werden.

Ferner kann mittels der CMM eine Rauheitsmessung mit dem erfindungsgemässen Sensor einer bestimmten Position an einem Prüfling zugeordnet werden. So können die generell mit allein relativem Positionsbezug generierten Rauheitsprofile in einem übergeordneten Objekt-Koordinatensystem referenziert werden.

Die erfindungsgemässe Vorrichtung wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig.1: eine Ausführungsform für einen optischen Rauheitssensor gemäss der Erfindung;
- Fig.2: eine weitere Ausführungsform für einen optischen Rauheitssensor gemäss der Erfindung;
- Fig.3: eine weitere Ausführungsform für einen optischen Rauheitssensor gemäss der Erfindung;
- Fig.4: eine weitere Ausführungsform für einen optischen Rauheitssensor gemäss der Erfindung;
- Fig.5: eine weitere Ausführungsform für einen optischen Rauheitssensor gemäss der Erfindung; und
- Fig.6: eine Koordinatenmessmaschine mit einem optischen Rauheitssensor gemäss der Erfindung.

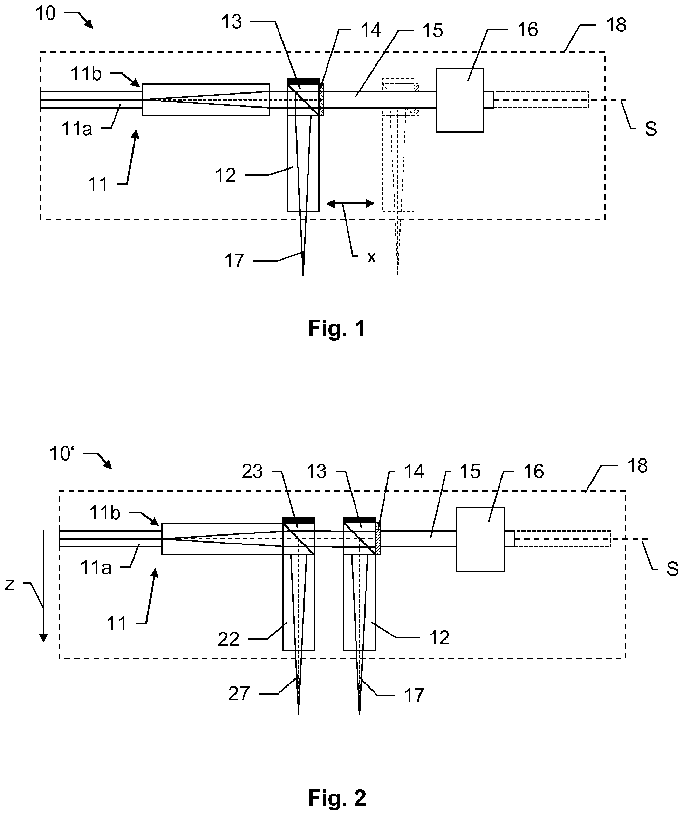

Figur 1 zeigt eine Ausführungsform für einen optischen Rauheitssensor 10 gemäss der Erfindung.

Der Rauheitssensor 10 weist eine Strahlkopplungsvorrichtung 11 auf, welche hier als eine Faserkopplung 11a (z.B. Ferrule) mit einer Optik (z.B. Linsenanordnung) ausgebildet ist und die Einkopplung und die Auskopplung von optischer Strahlung bereitstellt. Die Nutzstrahlung wird mittels einer optischen Faser in den Sensor 10 geführt.

Das Messprinzip des Rauheitssensors 10 basiert auf der Interferenz von Signalen mit einem Referenzsignal R, das durch einen lokalen Oszillator bereitgestellt wird.

In einer Ausführung kann der lokale Oszillator durch eine Reflexion der Eingangsstrahlung an der Endfläche der Strahlkopplungsvorrichtung 11 oder Ferrule 11a der optischen Faser (Endfläche 11b) bereitgestellt sein. Hierbei ist die Endfläche (Austrittsfläche) der Strahlkopplungsanordnung 11 als Referenzoszillatorelement zu verstehen.

Es ist zudem denkbar, dass der lokale Oszillator durch eine reflektierende Fläche 14 (Referenzoszillatorelement) am Strahlteiler 13 gebildet wird. Das Referenzoszillatorelement 14 ist dann an dem Strahlteiler 13 angeordnet. Alternativ kann eine Austrittsfläche des Strahlteilers 13 durch Aufdampfen einer reflektierenden Schicht das Referenzoszillatorelement 14 bilden. Insbesondere da der Abstand entlang der optischen Achse von der Fläche 14 bis zum einem fokussierten, axialen Messpunkt der Messstrahlung 17 (z.B. Brennpunkt/Fokus der Messstrahlung) konstant ist, kann dieses Design die Datenauswertung vereinfachen. Diesbezüglich detektierte Abstandsänderungen enthalten eine direkte Rauheitsinformation für die vermessene Oberfläche.

Das Messprinzip des Rauheitssensors 10 beruht insbesondere auf der bekannten Technik der optischen Kohärenztomografie, wobei Licht einer bestimmten Kohärenzlänge zur Entfernungsmessung mittels Interferometrie eingesetzt wird. Vorzugsweise wird die verwendete Messstrahlung dabei über einen bestimmten Frequenzbereich durchgestimmt. Der Messbereich ist im Wesentlichen durch die Kohärenzlänge der verwendeten Messstrahlung und damit z.B. durch die eingesetzte Laserstrahlquelle limitiert.

Der Strahlteiler 13 schafft eine Trennung eines Referenzstrahlpfads für den lokalen Oszillator und eines Auskoppelpfads eines Messstrahlauskopplers 12. Der Messstrahlauskoppler 12 stellt eine Emission und Fokussierung der Messstrahlung 17 in Richtung eines zu vermessenden Objekts bereit und ermöglicht das Erfassen von entsprechend an dem Objekt reflektierter Messstrahlung. Der Messstrahlauskoppler 12 stellt somit ein Oberflächensignal durch die reflektierte Messstrahlung bereit.

Als Nutzstrahlung wird vorzugsweise kohärente Laserstrahlung verwendet, wobei deren Referenzsignalanteil durch den optischen Aufbau mit der reflektierten Messstrahlung zur Interferenz gebracht wird. Basierend auf der Interferenz des Referenzsignals mit dem Oberflächensignal kann damit ein Rauheitssignal erzeugt und bereitgestellt werden.

In anderen Worten kann aus der Überlagerung des Referenzsignals mit dem Oberflächensignal eine punktuelle Entfernungsinformation zu einem zu vermessenden Objekt gewonnen werden. Diese Information kann einen absoluten oder relativen Abstand zwischen dem Rauheitssensor 10 und einem Punkt der Objektoberfläche repräsentieren.

Der Rauheitssensor 10 verfügt zudem über eine Antriebseinheit 16, die mittels eines Kolbens 15 oder einer Welle mit dem Messstrahlauskoppler 12 verbunden ist. Der Messstrahlauskoppler 12 und damit auch der Auskoppelpfad können also in einer lateralen Richtung x entlang einer Scanachse S mittels der Antriebseinheit 16 bewegt werden. Hierdurch wird eine zumindest zeilenweise Scanbewegung der Messstrahlung 17 über die Objektoberfläche ermöglicht.

Zur Erfassung eines Rauheitsprofils einer Objektoberfläche wird der Auskoppelpfad für eine bestimmte Scanstrecke lateral über die Objektoberfläche geführt, wobei der Rauheitssensor 10 gesamthaft, d.h. insbesondre das Gehäuse 18 des Rauheitssensors, relativ zur Objektoberfläche in einer unveränderten Positionierung verbleibt. Während der Bewegung des Messstrahlauskopplers 12 werden fortlaufend Reflexe der Messstrahlung 17 von der Oberfläche und damit das Oberflächensignal erfasst.

Zur Detektion und Erfassung des Oberflächenprofils wird das Oberflächensignal zusammen mit dem Referenzsignal - ebenfalls während der Relativbewegung des Auskoppelpfads - in bestimmten Intervallen oder fortlaufend detektiert bzw. verarbeitet. Durch die Rate der Signalverarbeitung kann so eine laterale Auflösung des Oberflächenprofils beeinflusst werden. Die Detektion der Signale kann z.B. mittels eines oder mehrerer entsprechend vorgesehener Photodetektoren erfolgen. Die Verarbeitung der detektierten Signale kann mittels einer nachgeschalteten Elektronik oder Datenverarbeitungseinheit erfolgen.

Die reflektierende Fläche 14 kann zudem durch einen Reflex der Nutzstrahlung zumindest ein laterales Positionssignal bereitstellen, mittels welchem die Position des Messstrahlauskopplers 12 in x-Richtung bestimmbar und überwachbar ist. Aus dem laterales Positionssignal und dem Messsignal 17 kann das Rauheitsprofil der gemessenen Oberfläche zweidimensional abgeleitet werden, also zeilenweise die Rauheit einer Oberfläche bestimmt werden.

Die betreffenden Signale können via die Strahlkopplungsvorrichtung 11 aus dem Sensor 10 transportiert und ausserhalb, z.B. seitens einer Koordinatenmessmaschine, detektiert und/oder weiterverarbeitet werden. Alternativ ist eine Ausführung mit einem in dem Sensor 10 angeordneten optischen Detektor zur Signaldetektion oder auch einer sensorseitigen Verarbeitungseinheit denkbar.

Figur 2 zeigt eine weitere Ausführungsform eines erfindungsgemässen optischen Rauheitssensors 10' für eine Koordinatenmessmaschine. Gleichartige oder gleichwirkende Elemente in unterschiedlichen Figuren sind mit gleichen Bezugszeichen versehen.

Wie bereits mit der Ausführungsform nach Figur 1 beschrieben verfügt auch der Sensor 10' über eine Strahlkopplungsvorrichtung 11, einen ersten Strahlteiler 13, eine reflektierende Fläche 14 zur Bereitstellung des lateralen Positionssignals und insbesondere des Referenzsignals, eine Führungsstange 15 und eine Antriebseinheit 16. Die genannten Komponenten wirken auf vergleichbare Weise wie oben beschrieben zusammen, d.h. der Auskoppelkanal 12 kann mittels der Antriebs 16 entlang der Scanachse geführt werden, wobei Oberflächendaten aufgrund einer Reflexion des Messstrahlanteils 17 erfassbar sind.

Der Rauheitssensor 10' weist einen zusätzlichen, zweiten Auskoppelpfad 22 mit einem zweiten Strahldurchtrittsfenster zur bidirektionalen Transmission eines ersten Kompensationsanteils 27 der Mess- bzw. Nutzstrahlung auf. Die Kompensationsstrahlung 27 wird mittels eines zweiten Strahlteilers 23 aus der in den Sensor 10' zugeführten optischen Strahlung ausgekoppelt. Beispielsweise weist der zweite Strahlteiler 23 eine 50% durchlässige bzw. reflektierende Beschichtung auf. 50% der zugeführten Strahlung werden dann als Kompensationsanteil 27 ausgekoppelt und 50% werden für den Messanteil 17 und den Referenzanteil gemeinsam verwendet. Der erst Strahlteiler 13 kann eine 99% reflektierende Beschichtung aufweisen, womit 99% als Mess- und 1% als Referenzteil dienen.

Der zweite Auskoppelpfad 22 des Rauheitssensors ist relativ zu diesem mit einer festen Positionsrelation vorgesehen, d.h. im Unterschied zu dem ersten Auskoppelpfad 12 ist der zweite solche Pfad 22 fest und unbeweglich an dem Sensor (insbesondere in dem Sensorgehäuse 18) angeordnet. Der zweite Auskoppelpfad 22 stellt somit eine positionskonstante Emission des Kompensationsstrahlanteils 27 bezüglich des Sensors 10 bereit.

Das Signal des lokalen Oszillators kann für diese und sämtliche anderen gezeigten Ausführungsformen der Erfindung alternativ oder zusätzlich durch eine erste Reflexion am Ende 11b der Faser-Ferrule 11a (Hülse) bereitgestellt sein (common path interferometry). Alle weiteren Reflexe können dann mit diesem und/oder einem weitern LO-Reflex (LO: lokaler Oszillator) interferieren.

Durch die Emission und das Erfassen der reflektierten Kompensationsstrahlung 27 kann eine Referenz für die Positionierung des Rauheitssensors 10' relativ zu der zu vermessenen Objektoberfläche in z-Richtung bereitgestellt werden. Das hierdurch erzeugbare erste Kompensationssignal repräsentiert einen Abstand des Sensors 10' zum Objekt. Da der zweite Auskoppelpfad 22 in lateraler Richtung x unverändert bleibt, d.h. im Wesentlichen auf einen festen Punkt des Objekts gerichtet bleibt, während der erste Auskoppelpfad 12 bewegt wird, können hierdurch Positionsveränderungen unabhängig von einer Rauheitsänderung festgestellt werden.

Das erste Kompensationssignal ermöglicht das Feststellen und Verrechnen von auftretenden Schwingungen oder Vibrationen einer Koordinatenmessmaschine, die den Sensor 10' trägt, insbesondere in z-Richtung. Dies erfolgt auf der Annahme, dass während der Rauheitsmessung mit der bewegten Messstrahlung 17 eine via den zweiten Auskoppelpfad 22 gemessene Entfernung konstant bleibt. Werden entlang diesem Pfad Abweichungen oder Variationen festgestellt, so liegt eine ungewünschte Relativbewegung vor, die wiederum für die Erstellung eines Oberflächenprofils zeitaufgelöst mitverarbeitet werden kann.

Solche Vibrationen können die gemessene Rauheit einer Oberfläche signifikant beeinflussen und dadurch zu einem entsprechend fehlerbehafteten Oberflächenprofil führen. Durch das fortlaufende Erfassen und Berücksichtigen des ersten Kompensationssignals kann somit ein vibrationskompensiertes Oberflächenprofil berechnet werden. Diese zweite Ausführungsform stellt somit einen spezifischen Rauheitssensor 10' für den Einsatz mit einer Koordinatenmessmaschine (CMM) bereit, der zudem eventuell auftretende Vibrationen und Schwingungen in der CMM zu kompensieren vermag bzw. die Kompensation bereitzustellen vermag.

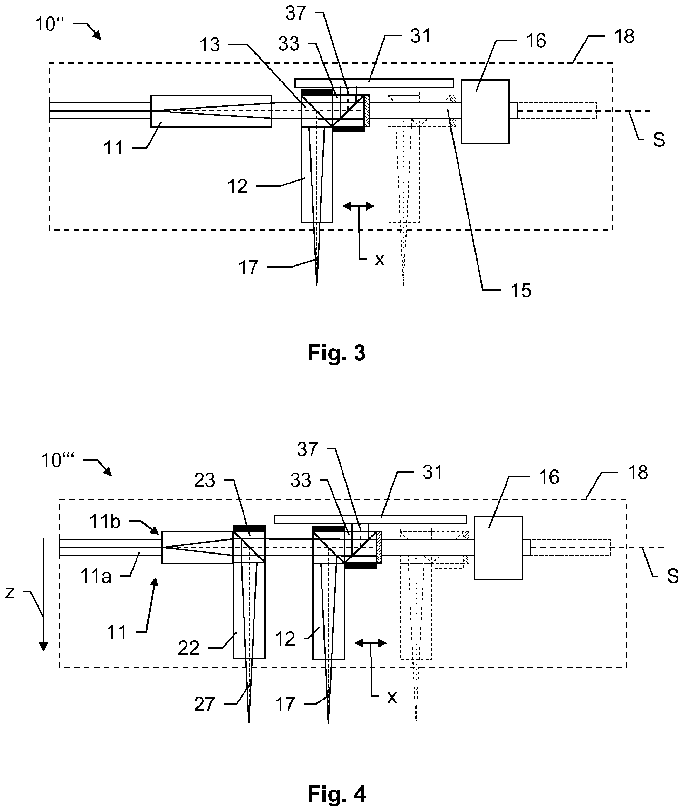

Die Figur 3 zeigt eine weitere Ausführungsform für einen erfindungsgemässen Rauheitssensor 10" zum vorzugsweisen Einsatz mit einer Koordinatenmessmaschine.

Die Ausführungsform basiert wiederum auf einem Sensor 10 gemäss Figur 1. Zusätzlich zu diesem Sensor weist der Sensor 10" eine sich parallel der Scanachse S erstreckende, fest positionierte Referenzkomponente 31 auf. Die Referenzkomponente 31 kann z.B. als reflektierende Fläche, z.B. Spiegel, ausgebildet sein. Zudem ist ein weiterer Strahlteiler 33 angeordnet, der eine Auskopplung eines Strahlteils 37 (Scankompensationsanteils) bereitstellt. Der Scankompensationsanteil 37 ist auf die Referenzkomponente 31 ausgerichtet und wird daran reflektiert. Hierdurch wird ein inneres (zweites) Kompensationssignal bereitgestellt. Der Strahlteiler 33 ist mit dem Auskoppelpfad 17 verbunden und entsprechend gemeinsam damit beweglich (in x-Richtung).

Es kann also ein Abstand zwischen dem beweglichen Auskoppelpfad 12 und dem Referenzelement 31 in einer bestimmten Rate oder auch fortlaufend erfasst werden. Die Anordnung aus Referenzkomponente 31 und Strahlteiler 33 kann hiermit eine innere Kompensation des Rauheitssensors bereitstellen, wobei eine Linearität der Scanbewegung des ersten Auskoppelpfads 12 erfassbar und überwachbar ist. Aus einer Überlagerung des Referenzsignals mit dem inneren Kompensationssignal kann der Abstand abgeleitet werden.

Insbesondere ist für die Messung mit dem Rauheitssensor 10" ein Sollabstand definiert, bei dessen Beibehaltung über die Scanbewegung entlang der Scanachse z.B. auf eine fehlerlose, lineare Scanbewegung geschlossen werden kann. Abweichung des Abstands können über die Scanposition aufgenommen werden und jeweilige Abstände können jeweiligen lateralen Positionen des ersten Auskoppelpfads 12 zugeordnet werden. Ein möglicher Versatz, Drift oder Vibrationen des bewegten Messstrahlauskopplers 12 können damit detektiert und mit den gleichzeitig erfassbaren Rauheitswerten verarbeitet werden. Die Anordnung ermöglicht also eine Erfassung und Kompensation von (axialen, z-Richtung) Positionsfehlern der inneren Sensoranordnung und damit auch des gemessenen Oberflächenprofils.

Um das Auftreten von parasitären Reflexen (durch ungewünschte Zwischen-Interferenzen) zu vermeiden bzw. gering zu halten, können die Amplituden der durch 14 und 31 bereitgestellten reflektierten Signale einige Grössenordnungen kleiner gewählt sein als für das Referenzsignal. Dies kann z.B. durch eine geringe Transmittivität (Durchlässigkeit) des Strahlteilers 13 erreicht werden.

Figur 4 zeigt eine Ausführungsform für einen erfindungsgemässen Rauheitssensor 10''', der eine Kombination aus den Ansätzen nach den Figuren 2 und 3 darstellt.

Durch ein solche Kombination der Ansätze können anhand der unterschiedlichen Signale sämtliche oben beschriebenen Konzepte in einem Rauheitssensor 10''' zusammen verwirklicht werden. Hierdurch kann ein Sensor 10''' bereitgestellt werden, der sowohl innere Scanningvibrationen, z.B. verursacht durch die Antriebseinheit 16, als auch externe Vibrationen wie von einer Koordinatenmessmaschine (z.B. ebenfalls durch deren Antriebe) oder anderen Umwelteinflüssen kompensierbar macht. Zudem kann für die Erzeugung dieser optischen Signale im Wesentlichen eine eingekoppelte Nutzstrahlung ausreichend sein, wobei diese Nutzstrahlung im Sensor 10''' in die benötigten Anteile aufgeteilt werden kann, d.h. Messanteil, erster (externer) und zweiter (interner) Kompensationsanteil und lateraler Positionsmessanteil.

Durch die Verwendung von entsprechend unterschiedlich teilreflektierenden Strahlteilern 13,23,33 können für die einzelnen Signale und Reflexe unterschiedliche Intensitäten definiert werden. Für die Auswertung dieser Signale können dann die jeweiligen (bekannten) Intensitätsniveaus berücksichtigt werden, wodurch eine Unterscheidung der Signale ermöglicht ist.

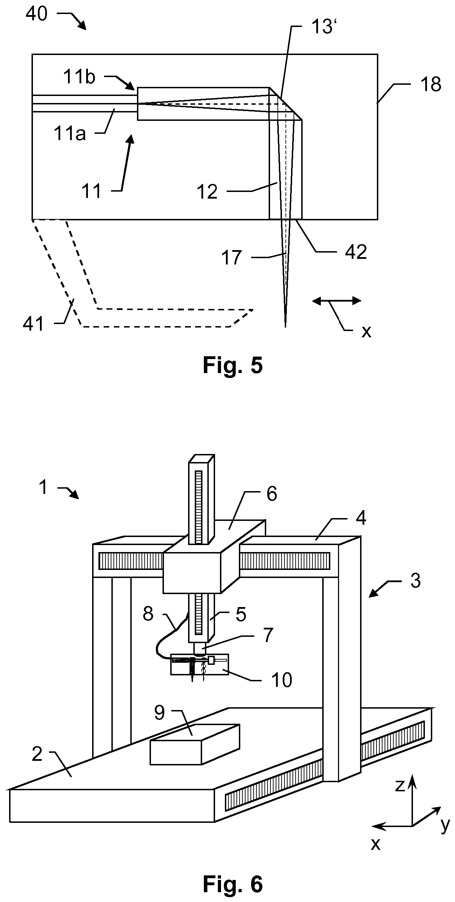

Figur 5 zeigt eine weitere Ausführungsformen eines erfindungsgemässen optischen Rauheitssensors 40 für eine Koordinatenmessmaschine mit wahlweise einem Abstandsreferenzelement 41.

Der Rauheitssensor 40 weist eine Strahlkopplungsvorrichtung 11 auf, welche hier wiederum als eine Faserkopplung 11a mit Optik ausgebildet ist und die Einkopplung und die Auskopplung von optischer Strahlung bereitstellt. Die Nutzstrahlung wird mittels einer optischen Faser in den Sensor 40 geführt. Der lokale Oszillator wird durch eine Reflexion der Eingangsstrahlung an der Endfläche 11b der Ferrule 11a der optischen Faser bereitgestellt.

Der Rauheitssensor 40 weist zudem eine Kopplungseinheit (nicht gezeigt) auf, mittels derer eine modulare und wiederholte Ankopplung des Sensors 40 an eine Koordinatenmessmaschine, insbesondere mit wiederholt hochgenauer relativer Positionierung, ermöglicht ist. Die Kopplungseinheit kann zur Übertragung von optischen und/oder elektrischen Signalen ausgebildet sein.

In der gezeigten Ausführung stellte ein Strahlumlenkelement 13' (z.B. Spiegel) eine Umlenkung der Messstrahlung 17 innerhalb des Gehäuses 18 bereit. Die Messstrahlung kann dadurch an der Unterseite des Gehäuses 18 durch ein Strahldurchtrittsfenster 42 aus dem Sensor 40 geführt werden. Reflektierte Messstrahlung ist über den gleichen Pfad erfassbar. Es versteht sich, dass anstelle des Umlenkmittels 13' die Ferrule 11a bzw. optische Faser bis zu dem Strahldurchtrittsfenster 42 geführt sein kann und die Endfläche 11b (der Ferrule oder der Faser) das Strahldurchtrittsfenster 42 bilden kann.

Mit einem solchen optischen Rauheitssensor 40 kann eine Messung durch gezieltes Führen des Sensors 40 entlang der zu messenden Oberfläche realisiert werden. Ein solcher Messpfad kann insbesondere anhand einer bekannten Objektform oder eines bekannten Oberflächenverlaufs definiert werden. Das Führen wird vorzugsweise mittels einer Koordinatenmessmaschine durchgeführt, wobei der Sensor 40 an einem Messkopf bzw. an einer geeignete Kopplung der CMM (modular) befestigt ist. Hierbei ist eine Beibehaltung eines konstanten bzw. hochgenau bekannten Abstands zwischen der Oberfläche und dem Sensor bevorzugt. Eine Abweichung dieses Abstands kann zu deutlichen Fehlern in einer Rauheitsmessung führen. Generell lässt sich mit einem solchen Ausbau eine Genauigkeit für die Messung im Rahmen der Positionierungsgenauigkeit der CMM erreichen.

Ein Abstandsreferenzelement 41 kann optional an dem Sensor 40 vorgesehen sein. Das Abstandsreferenzelement 41 ist hier beispielhaft als Kufe 41 ausgebildet und dient dazu, auf einer zu vermessenden Oberfläche aufgesetzt und für eine Messung unter Beibehaltung eines möglichst flächigen Kontakts über die Oberfläche bewegt zu werden. So kann ein konstanter Abstand zwischen Oberfläche und Sensor 40 während einer Messung beibehalten werden.

Eine Verwendung eines solchen Abstandsreferenzelements 41 ist vorteilhafterweise auch mit einem Rauheitssensor 10 der Figur 1 denkbar. Der Sensor 10 kann mittels des Abstandsreferenzelements 41 auf eine Oberfläche aufgesetzt werden, wobei eine laterale Bewegung dann nicht durch eine Bewegung des gesamten Sensors 10 sondern durch ein laterales Versetzen des Auskoppelpfades 12 in x-Richtung mittels des Antriebs 16 erfolgen kann.

In einer Ausführungsform kann das Abstandsreferenzelements 41 durch eine z.B. dreikomponentige Auflage verkörpert sein, wobei diese z.B. drei gekrümmte (z.B. sphärisch oder halb-kugelförmig) Elemente an der Unterseite des Gehäuses 18 aufweist. Hierdurch kann eine 3-Punk-Auflage für den Sensor bereitgestellt werden.

Figur 6 zeigt eine Koordinatenmessmaschine 1, beispielhaft ausgebildet als eine Portal-Koordinatenmessmaschine 1.

Die Koordinatenmessmaschine 1 weist eine Basis 2 auf, an der ein Portal 3 derart angeordnet ist, dass es in einer ersten Richtung (y-Richtung) bewegbar ist. Das Portal 3 weist zwei Portalträger, eine Brücke 4 und eine Stange oder Z-Säule 5 auf, wobei die Portalträger miteinander an ihren oberen Enden über die Brücke 4 verbunden sind.

Auf der Brücke 4 ist ein Schlitten 6 angeordnet, der entlang der Brücke 4, d.h. in einer die beiden Portalträger verbindenden zweiten Raumrichtung (x-Richtung) bewegbar ist. Die Stange oder z-Säule 5 ist in einer dritten Raumrichtung (z-Richtung) bewegbar und wird in einer Aufnahme des Schlittens 6 geführt. Für diese Bewegung in z-Richtung ist die Z-Säule 5 in Lagern geführt, welche Bestandteil des Schlittens 6 sind. Insbesondere sind die drei Raumrichtungen x, y und z hier senkrecht zueinander ausgerichtet, auch wenn dieses keine Voraussetzung für die vorliegende Erfindung ist.

Die Koordinatenmessmaschine 1 ist vorgesehen für die Bestimmung eines oder einer Vielzahl von Messpunkten auf einem Objekt 9 und weist daher drei lineare Führungsmechanismen zur Ermöglichung der Bewegung eines an der z-Säule 5 angeordneten Sensors 10 in den drei Raumrichtungen x, y und z relativ zur Basis 2 auf. Der Sensor 10 ist mittels einer Schnittstelle 7 zur modularen Aufnahme unterschiedlicher Sensoren an dem der Basis 2 zugewandten, unteren freien Ende der z-Säule 5 angeordnet.

Zudem ist der Sensor 10 mittels einer optischen Faser 8 mit optischer Nutzstrahlung versorgt. Die optische Faser 8 stellt zudem eine Übertragung der seitens des Sensors 10 gemessenen Signale aus dem Sensor 10 heraus bereit. Entsprechende Detektoren für die Signale und eine Signalverarbeitung sind an der Koordinatenmessmaschine 1 vorgesehen. Die Übertragung der optischen Strahlung kann alternativ auch integriert in der Schnittstelle 7 bereitgestellt sein.

Jeder lineare Führungsmechanismus hat eine zugeordnete Führung (in x-, y- bzw. z-Richtung). Ausserdem weist jeder lineare Führungsmechanismus ein zugeordnetes Messelement zur Positionsbestimmung in der zugeordneten Führungsrichtung, beispielsweise Messskalen für Positionsbestimmungen in x-, y- bzw. z-Richtung oder Linearencoder, auf.

In dieser Ausführungsform ist der Messkopf mit einem erfindungsgemässen Rauheitssensor 10 gemäss Figur 1 versehen. Generell können mittels der Schnittstelle 7 unterschiedliche Sensortypen aufgenommen werden, wie z.B. taktile Sensoren, mit denen ein mechanischer Kontakt zu einer zu vermessenden Objektoberfläche hergestellt wird, oder kontaktlos messende Sensoren, wie beispielsweise kapazitiver, induktiver und optischer Sensoren.

Die unterschiedlichen Sensoren können zudem in einer Auswechseleinheit (nicht gezeigt) vorgehalten werden und automatisch ausgetauscht, d.h. an die Schnittstelle 7 an- und von der Schnittstelle 7 abgekoppelt, werden.

Die Erfindung ist nicht beschränkt auf Portal-Koordinatenmessmaschinen, wie in Figur 1 dargestellt. Für die Erfindung geeignet ist vielmehr jede bekannte Art einer Koordinatenmessmaschine, welche eine Objektoberflächenvermessung mit einem optischen Sensor ermöglichen.

Die Koordinatenmessmaschine 1 weist ausserdem eine Steuerungs- und Verarbeitungseinheit, mit einem Prozessor und einem Datenträger auf. Mittels der Steuerungs- und Verarbeitungseinheit werden insbesondere Antriebe der Koordinatenmessmaschine 1 angesteuert und die Messdaten gespeichert und verarbeitet. Bevorzugt ist die Steuerungs- und Verarbeitungseinheit ausgebildet zur Ermöglichung einer vollautomatischen Vermessung von Objektoberflächen.

Für Zwecke direkter Benutzereingriffe oder direkter Benutzersteuerung kann die Steuerungs- und Verarbeitungseinheit auch mit einer Benutzer-Konsole verbunden sein, insbesondere Drahtlos z.B. via Funk.

Es versteht sich, dass diese dargestellten Figuren nur mögliche Ausführungsbeispiele schematisch darstellen. Die verschiedenen Ansätze können erfindungsgemäss ebenso miteinander sowie mit optischen Messkonzepten oder Koordinatenmessmaschinen des Stands der Technik kombiniert werden.

## Patentansprüche

1. Optischer Rauheitssensor (10, 10', 10",10"', 40) für eine Koordinatenmessmaschine (1), mit
• einer Strahlkopplungseinheit (11) zur Einkopplung von optischer Nutzstrahlung,
• einem lokalen Referenzoszillatorelement ausgestaltet zur Bereitstellung eines Referenzpfads und eines interferometrischen Referenzsignals mittels eines Referenzstrahlungsanteils der Nutzstrahlung und
• einem ersten Auskoppelpfad (12) mit einem ersten Strahldurchtrittsfenster eingerichtet zur derartigen bidirektionalen Transmission eines Messstrahlungsanteils (17) der Nutzstrahlung, dass
▪ der Messstrahlungsanteil (17) auf ein zu vermessendes Objekt (9) ausrichtbar und eine Reflexion des Messstrahlungsanteils (17) erfassbar ist und
▪ durch den reflektierten Messstrahlungsanteil (17) ein Oberflächensignal bezüglich einer Objektoberfläche bereitstellbar ist,
wobei der Referenzpfad und der Auskoppelpfad (12) derart angeordnet sind und zusammenwirken, dass das Referenzsignal und das Oberflächensignal interferieren und basierend auf der Interferenz von Referenzsignal und Oberflächensignal ein Rauheitssignal ableitbar ist,
**dadurch gekennzeichnet, dass**
der optische Rauheitssensor (10, 10', 10'', 10''', 40) eine Antriebseinheit (16) zur Bewegung des ersten Auskoppelpfads (12) aufweist, wobei die
Antriebseinheit (16) mit dem ersten Auskoppelpfad (12) derart gekoppelt ist, dass der erste Auskoppelpfad (12) parallel oder koaxial entlang einer Scanachse (S) relativ zur Strahlkopplungseinheit (11) gesteuert bewegbar ist.

2. Optischer Rauheitssensor (10, 10', 10'', 10"', 40) nach Anspruch 1,
**dadurch gekennzeichnet, dass**
der Rauheitssensor (10, 10', 10'', 10'"', 40) einen lateralen Positionspfad zur Breitstellung eines lateralen Positionssignals bezüglich einer Scanachsenposition des Auskoppelpfads (12) aufweist, wobei der laterale Positionspfad durch eine Reflexion eines Lateralstrahlungsanteils der Nutzstrahlung definiert ist.

3. Optischer Rauheitssensor (10, 10', 10'', 10"', 40) nach Anspruch 2,
**dadurch gekennzeichnet, dass**
der Rauheitssensor (10, 10', 10'', 10''', 40) einen ersten Strahlteiler (13) aufweist, wobei der erste Strahlteiler (13) eine zumindest teilweise Trennung des Auskoppelpfads (12) und des lateralen Positionspfads bereitstellt, insbesondere eine Trennung des Lateralstrahlungsanteils und des Messstrahlungsanteils.

4. Optischer Rauheitssensor (10, 10', 10'', 10''', 40) nach Anspruch 2 oder 3,
**dadurch gekennzeichnet, dass**
der Rauheitssensor (10, 10', 10'', 10''', 40) eine reflektierende Fläche (14), insbesondere Spiegel, zur Bereitstellung der Reflexion des Lateralstrahlungsanteils aufweist, insbesondere wobei die reflektierende Fläche (14) an dem ersten Strahlteiler (13) angeordnet ist.

5. Optischer Rauheitssensor (10, 10', 10'', 10"', 40) nach einem der Ansprüche 1 bis 4,
**dadurch gekennzeichnet, dass**
das Referenzoszillatorelement bereitgestellt ist durch
• eine Endfläche (11b) einer Ferrule (11a), insbesondere der Strahlkopplungseinheit (11) oder
• die an dem ersten Strahlteiler angeordnete reflektierende Fläche (14).

6. Optischer Rauheitssensor (10, 10', 10'', 10''', 40) nach einem der Ansprüche 1 bis 5,
**dadurch gekennzeichnet, dass**
der Rauheitssensor (10, 10', 10'', 10''', 40) eine Signalkompensationsanordnung zur Bereitstellung von zumindest einem Kompensationssignal aufweist, wobei
• eine Information bezüglich einer Messposition des Rauheitssensor (10, 10', 10", 10'", 40) relativ zu der Objektoberfläche, insbesondere bezüglich eines Abstands zwischen
Rauheitssensor (10, 10', 10'', 10''', 40) und Objektoberfläche, durch ein erstes Kompensationssignal bereitstellbar ist,
und/oder
• eine Kompensationsinformation bezüglich einer relativen Positionierung des Auskoppelpfads (12) in einem Rauheitssensorgehäuse (18) durch ein zweites Kompensationssignal bereitstellbar ist.

7. Optischer Rauheitssensor (10, 10', 10'', 10''', 40) nach Anspruch 6,
**dadurch gekennzeichnet, dass**
die Signalkompensationsanordnung einen zweiten Auskoppelpfad (22) mit einem zweiten Strahldurchtrittsfenster zur derartigen bidirektionalen Transmission eines ersten Kompensationsanteils (27) der Nutzstrahlung bereitstellt, dass
• der erste Kompensationsanteil (27) auf das zu vermessende Objekt (9) ausrichtbar und eine Reflexion an dem Objekt (9) des ersten Kompensationsanteils (27) erfassbar ist und
• durch den reflektierten ersten Kompensationsanteil (27) das erste Kompensationssignal bereitstellbar ist.

8. Optischer Rauheitssensor (10, 10', 10'', 10''', 40) nach Anspruch 7,
**dadurch gekennzeichnet, dass**
• der zweite Auskoppelpfad (22) positionsfest relativ zur Strahlkopplungseinheit (11), insbesondere positionsfest relativ zu dem Rauheitssensorgehäuse (18), angeordnet ist, und/oder
• der Rauheitssensor (10, 10', 10'', 10''', 40) einen die Auskopplung des ersten Kompensationsanteils (27) aus der Nutzstrahlung bereitstellenden zweiten Strahlteiler (23) aufweist.

9. Optischer Rauheitssensor (10, 10', 10'', 10"', 40) nach einem der Ansprüche 6 bis 8,
**dadurch gekennzeichnet, dass**
die Signalkompensationsanordnung
• eine sich parallel oder koaxial zur Scanachse (S) erstreckende Referenzkomponente (31) aufweist,
• eine Auskopplung eines Scankompensationsanteils (37) aus der Nutzstrahlung entlang eines Scankompensationspfads bereitstellt, wobei der Scankompensationspfad mit dem ersten Auskoppelpfad (12) verbunden und mittels der Antriebseinheit (16) gemeinsam mit dem ersten Auskoppelpfad (12) entlang der Scanachse (S) bewegbar angeordnet ist,
• eine Reflexion des Scankompensationsanteils (37) an der Referenzkomponente (31) für zumindest einen Teil einer Scanstrecke bereitstellt und
• durch den reflektierten Scankompensationsanteil (37) das zweite Kompensationssignal bereitstellbar ist.

10. Optischer Rauheitssensor (10, 10', 10'', 10"', 40) nach einem der Ansprüche 6 bis 9,
**dadurch gekennzeichnet, dass**
die Signalkompensationsanordnung derart angeordnet ist, dass das erste und/oder das zweite Kompensationssignal mit dem Referenzsignal interferieren und basierend auf einer Interferenz von
• Referenzsignal mit Oberflächensignal und
• Referenzsignal mit erstem Kompensationssignal und/oder
• Referenzsignal mit zweitem Kompensationssignal ein kompensiertes Rauheitssignal ableitbar ist.

11. Optischer Rauheitssensor (10, 10', 10'', 10''', 40) nach einem der Ansprüche 1 bis 10,
**dadurch gekennzeichnet, dass**
das Referenzoszillatorelement in einer festen Positionsrelation relativ zu dem ersten Auskoppelpfad (12) angeordnet und gemeinsam mit dem ersten Auskoppelpfad (12) bewegbar ist.

12. Optischer Rauheitssensor (10, 10', 10'', 10''', 40) nach einem der Ansprüche 1 bis 11,
**dadurch gekennzeichnet, dass**
der Rauheitssensor (10, 10', 10'', 10"', 40) ein in einer festen Positionsrelation relativ zu der Strahlkopplungseinheit (11) angeordnetes Abstandsreferenzelement (41) aufweist, wobei das Abstandsreferenzelement (41)
• zur oberflächenkontaktierenden Führung des Rauheitssensors (10, 10', 10'', 10''', 40) und
• zur Bereitstellung eines konstanten Abstands zur Objektoberfläche während einer Rauheitsmessung ausgebildet ist, insbesondere als Kufe.

13. Optischer Rauheitssensor (10, 10', 10'', 10"', 40) nach einem der Ansprüche 1 bis 12,
**dadurch gekennzeichnet, dass**
• der Rauheitssensor (10, 10', 10'', 10''', 40) zur modularen Ankopplung an die Koordinatenmessmaschine (1) ausgestaltet ist und/oder
• der Rauheitssensor (10, 10', 10'', 10''', 40) eine optische und/oder mechanische Schnittstelle aufweist, insbesondere eine integrierte optisch-mechanische Schnittstelle, wobei die Schnittstelle
eine bidirektionale Übertragung von optischer Strahlung zwischen dem Rauheitssensor (10, 10', 10'', 10''', 40) und der Koordinatenmessmaschine (1)
und/oder
eine Energieübertragung zumindest von der Koordinatenmessmaschine (1) zu dem Rauheitssensor (10, 10', 10'', 10''', 40) bereitstellt.

14. Koordinatenmessmaschine (1) zur Erfassung einer Oberflächeninformation bezüglich eines zu vermessenden Objekts (9), mit
• einer Basis (2),
• einer Schnittstelle (7) zum Anordnen eines Messsensors (10, 10', 10'', 10''', 40) für die Erfassung der Oberflächeninformation,
• einer Führung (3) zur Bereitstellung einer Relativbewegung der Schnittstelle (7) relativ zur Basis (2) in zumindest eine Richtung, insbesondere in zwei oder drei Richtungen, und
• einer Steuerungs- und Verarbeitungseinheit,
**dadurch gekennzeichnet, dass**
die Koordinatenmessmaschine (1) einen Rauheitssensor (10, 10', 10'', 10''', 40) gemäss einem der Ansprüche 1 bis 13 enthält und die Koordinatenmessmaschine eine Rauheitsmessfunktionalität aufweist, bei deren Ausführung gesteuert durch die Steuerungs- und Verarbeitungseinheit die Oberflächeninformation durch optisches Abtasten vermittels des an der Schnittstelle (7) angeordneten optischen Rauheitssensors (10, 10', 10", 10'", 40) als Messsensor erfassbar ist, wobei im Rahmen der Rauheitsmessfunktionalität
• die Schnittstelle (7) in eine definierte Position relativ zur Objektoberfläche bewegbar ist,
• ein Scanvorgang durch eine Relativbewegung eines ersten Auskoppelpfads (12) des Rauheitssensors (10, 10', 10'', 10''', 40) ausführbar ist, wobei
▪ ein Messstrahlungsanteil (17) einer Nutzstrahlung auf eine zu vermessende Objektoberfläche emittiert und eine Reflexion des Messstrahlungsanteils (17) an der Objektoberfläche erfasst wird und
▪ mittels eines durch den reflektierten Messstrahlungsanteil (17) bereitgestellten Oberflächensignals bezüglich der Objektoberfläche ein ein Oberflächenprofil repräsentierender Datensatz als die Oberflächeninformation erzeugt wird, und
• die Schnittstelle (7) während der Ausführung des Scanvorgangs in der definierten Position relativ zur Objektoberfläche verbleibt.

## Claims

1. Optical roughness sensor (10, 10', 10", 10'", 40) for a coordinate measuring machine (1), comprising
- a beam coupling unit (11) for coupling in optical useful radiation,
- a local reference oscillator element designed to provide a reference path and an interferometric reference signal by means of a reference radiation component of the useful radiation, and
- a first decoupling path (12) comprising a first beam passage window configured for bidirectional transmission of a measuring radiation component (17) of the useful radiation such that
- the measuring radiation component (17) can be aligned onto an object (9) to be measured and a reflection of the measuring radiation component (17) can be acquired and
- a surface signal with respect to an object surface can be provided by the reflected measuring radiation component (17),
wherein the reference path and the decoupling path (12) are arranged and interact such that the reference signal and the surface signal interfere and a roughness signal is derivable based on the interference of reference signal and surface signal.
**characterized in that**
the optical roughness sensor (10, 10', 10", 10'", 40) has a drive unit (16) for moving the first decoupling path (12), wherein the drive unit (16) is coupled to the first decoupling path (12) such that the first decoupling path (12) is movable in a controlled manner in parallel or coaxially along a scanning axis (S) in relation to the beam coupling unit (11).

2. Optical roughness sensor (10, 10', 10", 10'", 40) according to Claim 1,
**characterized in that** the roughness sensor (10, 10', 10", 10'", 40) has a lateral position path for providing a lateral position signal with respect to a scanning axis position of the decoupling path (12), wherein the lateral position path is defined by a reflection of a lateral radiation component of the useful radiation.

3. Optical roughness sensor (10, 10', 10", 10'", 40) according to Claim 2,
**characterized in that** the roughness sensor (10, 10', 10", 10'", 40) has a first beam splitter (13), wherein the first beam splitter (13) provides an at least partial separation of the decoupling path (12) and the lateral position path, in particular a separation of the lateral radiation component and the measuring radiation component.

4. Optical roughness sensor (10, 10', 10", 10'", 40) according to Claim 2 or 3,
**characterized in that** the roughness sensor (10, 10', 10", 10'", 40) has a reflective surface (14), in particular a mirror, for providing the reflection of the lateral radiation component, in particular wherein the reflective surface (14) is arranged on the first beam splitter (13).

5. Optical roughness sensor (10, 10', 10", 10'", 40) according to any one of Claims 1 to 4, **characterized in that** the reference oscillator element is provided by
- an end face (11b) of a ferrule (11a), in particular of the beam coupling unit (11) or
- the reflective surface (14) arranged on the first beam splitter.

6. Optical roughness sensor (10, 10', 10", 10'", 40) according to any one of Claims 1 to 5,
**characterized in that** the roughness sensor (10, 10', 10", 10'", 40) has a signal compensation arrangement for providing at least one compensation signal,
wherein
- an item of information with respect to a measuring position of the roughness sensor (10, 10', 10", 10'", 40) in relation to the object surface, in particular with respect to a distance between roughness sensor (10, 10', 10", 10'", 40) and object surface, can be provided by a first compensation signal, and/or
- an item of compensation information with respect to a relative positioning of the decoupling path (12) in a roughness sensor housing (18) can be provided by a second compensation signal.

7. Optical roughness sensor (10, 10', 10", 10'", 40) according to Claim 6,
**characterized in that** the signal compensation arrangement provides a second decoupling path (22) comprising a second beam passage window for bidirectional transmission of a first compensation component (27) of the useful radiation such that
- the first compensation component (27) can be aligned onto the object (9) to be measured and a reflection at the object (9) of the first compensation component (27) can be acquired and
- the first compensation signal can be provided by the reflected first compensation component (27).

8. Optical roughness sensor (10, 10', 10", 10'", 40) according to Claim 7,
**characterized in that**
- the second decoupling path (22) is arranged fixed in position relative to the beam coupling unit (11), in particular fixed in position relative to the roughness sensor housing (18), and/or
- the roughness sensor (10, 10', 10", 10'", 40) has a second beam splitter (23) which provides the decoupling of the first compensation component (27) from the useful radiation.

9. Optical roughness sensor (10, 10', 10", 10'", 40) according to any one of Claims 6 to 8, **characterized in that** the signal compensation arrangement
- has a reference component (31) extending parallel or coaxially to the scanning axis (S),
- provides a decoupling of a scanning compensation component (37) from the useful radiation along a scanning compensation path, wherein the scanning compensation path is connected to the first decoupling path (12) and is arranged so it is movable by means of the drive unit (16) jointly with the first decoupling path (12) along the scanning axis (S),
- provides a reflection of the scanning compensation component (37) on the reference component (31) for at least a part of a scanning route, and
- the second compensation signal can be provided by the reflected scanning compensation component (37).

10. Optical roughness sensor (10, 10', 10", 10'", 40) according to any one of Claims 6 to 9,
**characterized in that** the signal compensation arrangement is arranged such that the first and/or the second compensation signal interfere with the reference signal and a compensated roughness signal is derivable based on an interference of
- reference signal with surface signal and
- reference signal with first compensation signal and/or
- reference signal with second compensation signal.

11. Optical roughness sensor (10, 10', 10", 10'", 40) according to any one of Claims 1 to 10,
**characterized in that** the reference oscillator element is arranged in a fixed position relation relative to the first decoupling path (12) and is movable jointly with the first decoupling path (12).

12. Optical roughness sensor (10, 10', 10", 10'", 40) according to any one of Claims 1 to 11,
**characterized in that** the roughness sensor (10, 10', 10", 10'", 40) has a distance reference element (41) arranged in a fixed position relation relative to the beam coupling unit (11), wherein the distance reference element (41) is designed
- for the surface-contacting guiding of the roughness sensor (10, 10', 10", 10'", 40) and
- for providing a constant distance to the object surface during a roughness measurement, in particular as a runner.

13. Optical roughness sensor (10, 10', 10", 10'", 40) according to any one of Claims 1 to 12,
**characterized in that**
- the roughness sensor (10, 10', 10", 10'", 40) is designed for modular coupling to the coordinate measuring machine (1) and/or
- the roughness sensor (10, 10', 10", 10'", 40) has an optical and/or mechanical interface, in particular an integrated optical-mechanical interface, wherein the interface provides
- a bidirectional transmission of optical radiation between the roughness sensor (10, 10', 10", 10'", 40) and the coordinate measuring machine (1) and/or
- an energy transfer at least from the coordinate measuring machine (1) to the roughness sensor (10, 10', 10", 10'", 40).

14. Coordinate measuring machine (1) for acquiring an item of surface information with respect to an object (9) to be measured, comprising
- a base (2),
- an interface (7) for arranging a measuring sensor (10, 10', 10", 10'", 40) for the acquisition of the item of surface information,
- a guide (3) for providing a relative movement of the interface (7) relative to the base (2) in at least one direction, in particular in two or three directions, and
- a control and processing unit,
**characterized in that** the coordinate measuring machine (1) comprises a roughness sensor (10, 10', 10", 10'", 40) according to one of claims 1 to 13 and the coordinate measuring machine has a roughness measuring functionality, upon the execution of which, controlled by the control and processing unit, the item of surface information can be acquired by optical scanning by means of the optical roughness sensor (10, 10', 10", 10'", 40) as the measuring sensor arranged on the interface (7), wherein in the scope of the roughness measuring functionality
- the interface (7) is movable into a defined position relative to the object surface,
- a scanning procedure is executable by a relative movement of a first decoupling path (12) of the roughness sensor (10, 10', 10", 10'", 40), wherein
- a measuring radiation component (17) of useful radiation is emitted onto an object surface to be measured and a reflection of the measuring radiation component (17) at the object surface is acquired and
- a dataset representing a surface profile is generated as the item of surface information by means of a surface signal provided by the reflected measuring radiation component (17) with respect to the object surface, and
- the interface (7) remains in the defined position relative to the object surface during the execution of the scanning procedure.

## Revendications

1. Capteur optique de rugosité (10, 10', 10", 10''', 40) pour une machine à mesurer les coordonnées (1), comportant
• une unité d'injection de rayonnement (11) destinée à injecter un rayonnement optique utile,
• un élément d'oscillateur de référence local conçu pour créer un chemin de référence et un signal interférométrique de référence au moyen d'une partie de référence du rayonnement utile et
• un premier chemin de découplage (12) configuré avec une première fenêtre de passage de rayonnement destinée à transmettre une partie métrologique (17) du rayonnement utile, ladite transmission étant bidirectionnelle et telle que
□ il est possible de diriger la partie métrologique (17) du rayonnement vers un objet à mesurer (9) et de capter la réflexion de ladite partie métrologique (17) du rayonnement et
□ à partir de la réflexion de la partie métrologique (17) du rayonnement, il est possible de créer un signal de surface concernant une surface de l'objet,
le chemin de référence et le chemin de découplage (12) étant disposés et interagissant de manière que le signal de référence et le signal de surface interfèrent et qu'il soit possible de déduire un signal de rugosité à partir de l'interférence du signal de référence et du signal de surface,
**caractérisé en ce que**
le capteur optique de rugosité (10, 10', 10", 10''', 40) présente une unité motrice (16) destinée à déplacer le premier chemin de découplage (12), ladite unité motrice (16) étant couplée au premier chemin de découplage (12) de manière qu'il soit possible de commander le déplacement dudit premier chemin de découplage (12) de manière parallèle ou coaxiale à un axe de balayage (S) relativement à l'unité d'injection de rayonnement (11).

2. Capteur optique de rugosité (10, 10', 10", 10'", 40) selon la revendication 1,
**caractérisé en ce que**
le capteur optique de rugosité (10, 10', 10"s, 10"', 40) présente un chemin de position latérale pour créer un signal de position latérale concernant la position sur l'axe de balayage du chemin de découplage (12), ledit chemin de position latérale étant défini par une réflexion d'une partie latérale du rayonnement utile.

3. Capteur optique de rugosité (10, 10', 10", 10'", 40) selon la revendication 2,
**caractérisé en ce que**
le capteur de rugosité (10, 10', 10", 10"', 40) présente un premier séparateur de faisceau (13), lequel premier séparateur de faisceau (13) effectue une séparation au moins partielle du chemin de découplage (12) et du chemin de position latérale, notamment une séparation de la partie latérale du rayonnement et de la partie métrologique du rayonnement.

4. Capteur optique de rugosité (10, 10', 10", 10"', 40) selon la revendication 2 ou 3,
**caractérisé en ce que**
le capteur de rugosité (10, 10', 10", 10''', 40) présente une surface réfléchissante (14), notamment un miroir, pour créer la réflexion de la partie latérale du rayonnement, la surface réfléchissante (14) étant notamment disposée sur le premier séparateur de faisceau (13).

5. Capteur optique de rugosité (10, 10', 10", 10''', 40) selon l'une des revendications 1 à 4,
**caractérisé en ce que**
l'élément d'oscillateur de référence est constitué par
• la surface d'extrémité (11b) d'une virole (11a), notamment de l'unité d'injection de rayonnement (11) ou
• la surface réfléchissante (14) disposée sur le premier séparateur de faisceau.

6. Capteur optique de rugosité (10, 10', 10", 10"', 40) selon l'une des revendications 1 à 5,
**caractérisé en ce que**
le capteur de rugosité (10, 10', 10", 10''', 40) présente un dispositif compensatoire du signal pour créer au moins un signal compensatoire,
• un premier signal compensatoire pouvant constituer une information concernant une position de mesure du capteur de rugosité (10, 10', 10", 10''', 40) par rapport à la surface de l'objet, notamment concernant la distance entre le capteur de rugosité (10, 10', 10", 10"', 40) et la surface de l'objet,
et/ou
• un deuxième signal compensatoire pouvant constituer une information compensatoire concernant une position relative du chemin de découplage (12) dans un boîtier de capteur de rugosité (18).

7. Capteur optique de rugosité (10, 10', 10", 10''', 40) selon la revendication 6,
**caractérisé en ce que**
le dispositif compensatoire du signal crée un deuxième chemin de découplage (22) avec une deuxième fenêtre de passage de rayonnement destinée à transmettre une première partie compensatoire (27) du rayonnement utile, ladite transmission étant bidirectionnelle et telle que
• il est possible de diriger la première partie compensatoire (27) vers l'objet à mesurer (9) et de capter la réflexion sur l'objet (9) de ladite première partie compensatoire (27) et
• la réflexion de ladite première partie compensatoire (27) permet de constituer le premier signal compensatoire.

8. Capteur optique de rugosité (10, 10', 10", 10''', 40) selon la revendication 7,
**caractérisé en ce que**
• le deuxième chemin de découplage (22) est disposé à une position fixe par rapport à l'unité d'injection de rayonnement (11), notamment à une position fixe par rapport au boîtier de capteur de rugosité (18),
et/ou
• le capteur de rugosité (10, 10', 10", 10"', 40) présente un deuxième séparateur de faisceau (23) qui effectue le découplage entre la première partie compensatoire (27) et le rayonnement utile.

9. Capteur optique de rugosité (10, 10', 10", 10''', 40) selon l'une des revendications 6 à 8,
**caractérisé en ce que**
le dispositif compensatoire du signal
• présente une composante de référence (31) qui s'étend de manière parallèle ou coaxiale à l'axe de balayage (S),
• effectue un découplage entre une partie compensatoire de balayage (37) et le rayonnement utile le long d'un chemin compensatoire de balayage, ledit chemin compensatoire de balayage étant lié au premier chemin de découplage (12) et disposé au moyen de l'unité motrice (16) de manière à pouvoir être déplacé avec ledit premier chemin de découplage (12) le long de l'axe de balayage (S),
• crée une réflexion de la partie compensatoire de balayage (37) sur le composant de référence (31) pour au moins une partie d'un parcours de balayage et
• ladite réflexion de la partie compensatoire de balayage (37) pouvant constituer le deuxième signal compensatoire.

10. Capteur optique de rugosité (10, 10', 10", 10"', 40) selon l'une des revendications 6 à 9,
**caractérisé en ce que**
le dispositif compensatoire du signal est disposé de manière que le premier et/ou le deuxième signal compensatoire interfèrent avec le signal de référence et qu'il soit possible de déduire un signal de rugosité compensé à partir de l'interférence
• du signal de référence et du signal de surface et
• du signal de référence et du premier signal compensatoire et/ou
• du signal de référence et du deuxième signal compensatoire.

11. Capteur optique de rugosité (10, 10', 10", 10"', 40) selon l'une des revendications 1 à 10,
**caractérisé en ce que**
l'élément d'oscillateur de référence est disposé dans une position relative fixe par rapport au premier chemin de découplage (12) et peut être déplacé avec ledit premier chemin de découplage (12).

12. Capteur optique de rugosité (10, 10', 10", 10'", 40) selon l'une des revendications 1 à 11,
**caractérisé en ce que**
le capteur de rugosité (10, 10', 10", 10"', 40) présente un élément de référence de distance (41) qui est disposé dans une position relative fixe par rapport à l'unité d'injection de rayonnement (11), ledit élément de référence de distance (41) étant conçu
• pour le guidage par contact surfacique du capteur de rugosité (10, 10', 10", 10''', 40) et
• pour la conservation d'une distance constante à la surface de l'objet pendant la mesure de rugosité,
notamment sous la forme d'un patin.

13. Capteur optique de rugosité (10, 10', 10", 10"', 40) selon l'une des revendications 1 à 12,
**caractérisé en ce que**
• le capteur de rugosité (10, 10', 10", 10''', 40) est conçu pour un couplage modulaire à la machine à mesurer les coordonnées (1)
et/ou
• le capteur de rugosité (10, 10', 10", 10'", 40) présente une interface optique et/ou mécanique, notamment une interface optomécanique intégrée, ladite interface effectuant
□ une transmission bidirectionnelle de rayonnement optique entre le capteur de rugosité (10, 10', 10", 10"', 40) et la machine à mesurer les coordonnées (1)
et/ou
□ un transfert d'énergie au moins de la machine à mesurer les coordonnées (1) vers le capteur de rugosité (10, 10', 10", 10''', 40).

14. Machine à mesurer les coordonnées (1) destinée à collecter une information surfacique concernant un objet à mesurer (9), comportant
• une base (2),
• une interface (7) destinée à la disposition d'un capteur de mesure (10, 10', 10", 10"', 40) servant à collecter l'information surfacique,
• un guide (3) permettant de réaliser un déplacement relatif de l'interface (7) par rapport à la base (2) dans au moins une direction, notamment deux ou trois directions, et
• une unité de commande et de traitement,
**caractérisée en ce que**
la machine à mesurer les coordonnées (1) comporte un capteur de rugosité (10, 10', 10", 10''', 40) selon l'une des revendications 1 à 13 et présente une fonctionnalité de mesure de rugosité pendant l'exécution de laquelle il est possible, au moyen du capteur optique de rugosité (10, 10', 10", 10'", 40) servant de capteur de mesure disposé sur l'interface (7), de collecter l'information surfacique par balayage optique, sous la commande de l'unité de commande et de traitement ; étant entendu que, dans le cadre de ladite fonctionnalité de mesure de rugosité,
• l'interface (7) peut être déplacée en conservant une position définie par rapport à la surface de l'objet,
• un processus de balayage peut être effectué par un déplacement relatif d'un premier chemin de découplage (12) du capteur de rugosité (10, 10', 10", 10"', 40),
□ une partie métrologique (17) d'un rayonnement utile étant émis vers une surface de l'objet à mesurer et une réflexion de ladite partie métrologique (17) étant captée à la surface de l'objet et
□ un jeu de données représentant le profil surfacique étant créé en tant qu'information surfacique au moyen d'un signal de surface concernant la surface de l'objet, par la réflexion de ladite partie métrologique (17) du rayonnement, et
• l'interface (7) conserve ladite position définie par rapport à la surface de l'objet pendant l'exécution du processus de balayage.
